# EUROPEAN PATENT SPECIFICATION

(11) **EP 4 465 552 B1**
(45) Date of publication and mention of the grant of the patent: **13.08.2025**
(21) Application number: 23173560.6
(22) Date of filing: 16.05.2023
(51) Int. Cl.: H04B 10/11, H04B 10/70

(54) **PASSIVE SPATIAL BEAM OVERLAP IN A LASER COMMUNICATION TERMINAL FOR QUANTUM KEY DISTRIBUTION AND QUANTUM COMMUNICATION**
PASSIVE RÄUMLICHE STRAHLÜBERLAPPUNG IN EINEM LASERKOMMUNIKATIONSENDGERÄT ZUR QUANTENSCHLÜSSELVERTEILUNG UND QUANTENKOMMUNIKATION
CHEVAUCHEMENT DE FAISCEAU SPATIAL PASSIF DANS UN TERMINAL DE COMMUNICATION LASER POUR DISTRIBUTION DE CLÉ QUANTIQUE ET COMMUNICATION QUANTIQUE

(43) Date of publication of application: 20.11.2024
(73) Proprietor: Airbus Defence and Space GmbH, 82024 Taufkirchen (DE)
(72) Inventor: Barg, Andreas, 82024 Taufkirchen (DE); Lamour, Tobias, 82024 Taufkirchen (DE); Köhler, Jess, 82024 Taufkirchen (DE); Stute, Andreas, 82024 Taufkirchen (DE)
(74) Representative: Frenkel, Matthias Alexander

(56) References cited:
- US-A1- 2021 133 614
- US-A1- 2022 140 900
- SCHREIER ANDY ET AL: "Coexistence of Quantum and 1.6 Tbit/s Classical Data Over Fibre-Wireless-Fibre Terminals", JOURNAL OF LIGHTWAVE TECHNOLOGY, IEEE, USA, vol. 41, no. 16, 18 March 2023 (2023-03-18), pages 5226 - 5232, XP011945477, ISSN: 0733-8724, [retrieved on 20230320], DOI: 10.1109/JLT.2023.3258146

## Description

Quantum technologies exploit the extraordinary behavior of small particles, such as quantum superposition and entanglement. One such technology is quantum key distribution (QKD), a method to establish secure communication between two parties by exchanging single quanta of light (photons) on which a secret key is encoded. Eavesdropping on the key is detected by both parties, due to the fundamental aspect of quantum mechanics and the implemented quantum communication protocol. Nowadays, QKD is available as a commercial product, and it is typically implemented using dedicated optical fibers that guide single photons over many kilometers. Due to losses in the optical fibers, the maximum distance over which the key exchange can take place is limited. For this reason, space-based solutions with satellites and ground stations capable of QKD exchange have gained considerable interest over the last decade.

Another important quantum technology is the quantum computer that operates on quantum bits (qubits) and promises to solve computational problems in a much shorter time than classical computers. Multiple quantum computers may be linked by exchanging entangled qubits between them and thus create a powerful computer cluster. To achieve this quantum communication (QC) over large distances, it has been proposed to use satellites exchanging qubits via a single photon communication system.

A crucial part of any space-based solution for QKD or QC is a laser communication terminal (LCT) that includes an optical bench and a telescope to facilitate the exchange of photons over long distances. In general, LCTs require ultra-high precision control of the pointing of multiple laser beams on the order of few µrad or below. This pointing accuracy needs to be established towards the communication partner located hundreds to thousands of kilometers apart. The communication partner may be a satellite or a ground station that receives and/or transmits the laser beams. For the pointing, LCTs typically use a control loop feeding back an error signal to a fine-steering mechanism (FSM) as an actuator. In a conventional optical bench, one FSM allows for accurate pointing of a single laser beam. Consequently, introducing an extra light beam into the optical bench and overlaying it with the first via free-space beam splitters requires an extra FSM to control the relative pointing between the two light beams. This extra FSM introduces more complexity and costs, as well as an additional single point of failure to such conventional system. LCTs for space-based QKD or QC need to spatially overlap at least two beam paths: the quantum channel and the classical channel. An inadequate beam overlap between the two results in optical losses and, in the case of QKD, it represents a notable security vulnerability for the quantum channel.

From US 2021/133614 A1 a system for use with quantum system is known. The document discloses a transmitter that uses four different polarized attenuated lasers to generate quantum bits through the quantum bit generator. Photons from the quantum bit generator are delivered via a single mode fiber to a telescope.

From US 2022/140900 A1 a free space optical communications terminal. The terminal includes an optical source arranged to provide a first beam of light encoding information to be communicated; an optical source arranged to provide photons encoding bits of a key of a Quantum Key Distribution protocol; and an optics arrangement. The optics arrangement is configured to combine the first beam and the photons via a polarization beam combiner into a single, second, beam to be transmitted to a receiver terminal.

Thus, there is a need for a technical solution for overlapping laser signals/beams with a reduced complexity, especially in communication terminals.

This technical need/object is achieved/solved by a system according to claim 1, a terminal according to claim 7, a satellite or ground-based station or aircraft or spacecraft according to claim 8, and a method according to claim 9.

According to a first aspect, a system for information transmission (quantum key distribution and quantum communication) in a quantum communication network is provided. The system comprises a first laser signal source, a second laser signal source, a coupler unit, an optical waveguide and a directional unit. The first laser signal source is configured to generate a first laser signal. The second laser signal source is configured to generate a second laser signal. Each laser signal source (of the first laser signal source and the second laser signal source) is configured to provide the corresponding laser signal to the coupler unit. The coupler unit is configured to receive and to couple both (the first laser signal and the second laser signal) laser signals. The coupler unit is configured to provide coupled laser signals to the optical waveguide. The optical waveguide is configured to receive the coupled laser signals. The optical waveguide is configured to cause a (passive) concentric (spatial) alignment of the coupled laser signals by allowing the received coupled laser signals a mode propagation to provide concentrically (spatially) aligned laser signals. The waveguide may be configured to (only) transmit (spatial) mode-matched laser signals, wherein said mode-matched laser signals may be achieved in the optical waveguide by forcing the coupled laser signals, in particular each laser signal of the coupled laser signals into a mode propagation, in particular a single-/fundamental-mode propagation to provide concentrically (spatially) aligned laser signals. The optical waveguide is configured to provide the concentrically (spatially) aligned or mode-matched laser signals to the directional unit. The directional unit is configured to receive the concentrically (spatially) aligned or mode-matched laser signals. The directional unit is configured to provide the concentrically (spatially) aligned or mode-matched laser signals to a second terminal of the quantum communication network. The directional unit can be configured to point the concentrically (spatially) aligned or mode-matched laser signals to a receiver or a second terminal of the quantum communication network. The optical waveguide may, in short, sometimes be referred to as waveguide, but still be configured as an optical waveguide.

Regarding the waveguide: The waveguide comprises one or more certain waveguide properties (e.g. dimension, material(s), numerical aperture etc.) which allow a certain received laser signal with certain laser signal properties a mode propagation, e. g. a single mode propagation, within/along the waveguide. In other words, if the laser signal properties are within one or more certain mode propagation criteria, the received laser signal propagates within/along the waveguide at a certain mode, in particular a/the same mode. In case of two laser signals with different wavelengths but within the mode propagation criteria, both laser signals propagate through the same mode but at different wavelengths. When the mode propagating laser signals leave the waveguide through one end, a nearly perfect concentric (spatial) alignment or mode-matching of the said laser signals may be passively caused. The laser signals that leave the waveguide through one end may be (nearly or almost perfectly) concentrically (spatially) aligned or mode-matched as they propagated previously at the (same) mode, in particular the (same) single or fundamental-mode within/along the waveguide. Hence, the waveguide may cause a (nearly perfect) concentric (spatial) alignment or mode-matching.

The first laser signal source is configured to provide classic information via an optical modulations scheme. The second laser signal source is configured to provide quantum information via single photon pulses.

This has the advantage that accurate steering (pointing towards a receiver of another LCT) of a low power quantum channel can be done indirectly via a steering of the classical channel, which operates at much higher optical powers and thus results in a better signal for the pointing feedback and thus a better pointing performance. Apart from this, the system may simplify the efforts in alignment, integration and test (AIT), due to the reduced number of parts. Any thermo-mechanical effects on the optical bench of the LCT affects both channels in a very same way and can be compensated by the one (and only) fine steering mechanism in the directional unit. Moreover, the algorithm running the single pointing in the directional unit is less complex than the algorithm running two pointing systems simultaneously, like in conventional LCTs for QKD and QC. This contributes favorably to the stability, performance and security of the system in operation.

Further, the laser beam with single photon signals may be controlled/guided between the laser terminals without monitoring any of the single photons.

The mode propagation may be configured as a single, in particular as a same single, mode propagation. The single mode may be or comprise or be understood as the lowest (order) propagation mode of the waveguide. In case of an optical single-mode fiber, this may be the LP₀₁ Mode. In one specific implementation, the waveguide can be configured as a single-mode fiber.

The first laser signal may comprise a first laser signal power. The second laser signal may comprise a second laser signal power. The coupler unit can be further configured to couple both laser signals, i. e. the first laser signal and the second laser signal, according to a predefined power division ratio. The power division ratio might be in favor of the first laser signal. The power division ratio might be 99:1 or 1:99. This can allow that most power of the first laser signal, in particular the classical channel, is combined with a fraction of the second laser signal, in particular the quantum channel.

The coupler unit can further comprise a first entrance, configured to receive the first laser signal. The coupler unit can further comprise a second entrance, configured to receive the second laser signal. Each entrance, i. e. the first entrance and the second entrance, may be configured to provide their received laser signal (first entrance, first signal; second entrance, second signal) to a couple area. The couple area can be configured to receive both laser signals. The couple area can be configured to couple both laser signals. The couple area can be configured to couple both laser signals according to the predefined power division ratio into a first portion of coupled laser signals and a second portion of coupled laser signals.

The couple area can be configured to provide the first portion of coupled laser signals to a first output. The couple area can be configured to provide the second portion of coupled laser signals to a second output. The first output can be configured to provide the first portion of coupled laser signals to the waveguide. The second output can be configured to provide the second portion of the coupled laser signals to an absorber or an absorber unit/material. Alternatively, the second output can be configured to provide the second portion of the coupled laser signals to a fiber terminator or a detection unit, in particular a photodetector. The detection unit, in particular the photodetector, can be configured to monitor the power of the second portion and/or monitor the power division ratio.

The coupler unit can be configured as a beam coupler, in particular a free space beam coupler, or an (optical) fiber coupler, in particular a single-mode fiber coupler.

It is clear that in case of a fiber coupler, in particular a single mode fiber coupler, the concentric (spatial) alignment or mode-matching may be achieved at that moment, when both laser signals are coupled in the couple area. Hence, both outputs of the fiber coupler may provide concentrically (spatially) aligned coupled laser signals or mode-matched coupled laser signals.

The waveguide can further comprise a first and a second end. The first end can be configured to receive the first portion of coupled laser signals. The second end can be configured to provide the concentrically (spatially) aligned or mode-matched laser signals to the directional unit.

The second laser signal source, the coupler unit and the waveguide may be arranged within a security unit to prevent eavesdropping, in particular photon-number splitting attacks. The absorption unit/material can be within a security unit to prevent eavesdropping, in particular photon-number splitting attacks. The security unit can be configured to prevent compromising radiation.

The first laser signal source can be further configured to be an entrance interface to the security unit. A second end of the waveguide that provides the concentrically (spatially) aligned or mode-matched laser signals may be further configured to be an output interface out of the security unit.

According to a second aspect, a communication terminal, in particular a laser communication terminal, comprising the system according to the first aspect is proposed.

According to a third aspect, a satellite or ground-based station or aircraft or spacecraft comprising the system according to the first aspect is proposed.

According to a fourth aspect, an apparatus for providing concentrically (spatially) aligned or mode-matched laser beams maybe provided. The apparatus may comprises at least two laser beam sources, a coupler and an optical waveguide. Each of the at least two laser beam sources may be configured to generate a laser beam and provide the laser beam to the coupler. The coupler may be configured to receive the at least two laser beams. The coupler may be configured to couple the at least two laser beams. The coupler may be configured to provide at least two coupled laser beams to the optical waveguide. The optical waveguide may be configured to receive the at least two coupled laser beams. The optical waveguide may be configured to cause a concentric (spatial) alignment or mode-matching of the coupled laser beams by allowing/enforcing the received at least two laser beams a mode propagation, e. g. a single mode propagation. In this way, the optical waveguide may be configured to provide concentrically (spatially) aligned or mode-matched laser beams.

Regarding the waveguide: The waveguide comprises one or more certain waveguide properties (e.g. dimension, material(s), numerical aperture etc.) which allow a certain received laser signal with certain laser signal properties a mode propagation, e. g. a single mode propagation, within/along the waveguide. In other words, if the laser signal properties are within one or more certain mode propagation criteria, the received laser signal propagates within/along the waveguide at a certain mode, in particular a/the same mode. In case of two laser signals with different wavelengths but within the mode propagation criteria, both laser signals propagate through the same mode but at different wavelengths. When the mode propagating laser signals leave the waveguide through one end, a nearly perfect concentric (spatial) alignment or mode-matching of the said laser signals may be passively caused. The laser signals that leave the waveguide through one end may be (nearly or almost perfectly) concentrically (spatially) aligned or mode-matched as they propagated previously at the (same) mode, in particular the (same) single or fundamental-mode within/along the waveguide. Hence, the waveguide may cause a (nearly perfect) concentric (spatial) alignment or mode-matching.

The mode propagation may be configured as a single, in particular as a same single, mode propagation (of the waveguide of the apparatus). The single mode may be or comprise or be understood as the lowest (order) propagation mode physically possible. In case of an optical single-mode fiber, this may be the LP₀₁ Mode. In one specific implementation, the waveguide can be configured as a single-mode fiber.

The first laser beam can comprise a first laser beam power. The second laser beam can comprise a second laser beam power. The coupler may be further configured to couple both laser beams according to a predefined power division ratio.

The coupler can further comprise a first entrance, configured to receive the first laser beam. The coupler can further comprise a second entrance, configured to receive the second laser beam. Each entrance of the coupler can be configured to provide their received laser beam to a couple area of the coupler. The couple area can be configured to receive both laser beams. The couple area of the coupler can be configured to couple both laser beams according to the predefined power division ratio into a first portion of coupled laser beams and a second portion of coupled laser beams. The couple area can be further configured to provide the first portion of coupled laser beams to a first output. The couple area can be further configured to provide the second portion of coupled laser beams to a second output. The first output of the coupler can be configured to provide the first portion of coupled laser beams to the waveguide of the apparatus. The second output of the coupler of the apparatus can be configured to provide the second portion of coupled laser beams to an absorber or an absorber unit/material.

The coupler can be configured as beam coupler, in particular a free space beam coupler, or an optical fiber coupler, in particular a single-mode fiber coupler.

It is clear that in case of a fiber coupler, in particular a single mode fiber coupler, the concentric (spatial) alignment or mode-matching may be achieved at that moment, when both laser beams are coupled in the couple area. Hence, both outputs of the single mode fiber coupler may provide concentrically (spatially) aligned coupled laser beams or mode-matched coupled laser beams.

According to a fifth aspect, a method for information transmission / quantum key distribution and quantum communication in a quantum communication network is proposed. The method comprises providing a first laser signal source configured to provide a first laser signal. The method comprises providing a second laser signal source configured to provide a second laser signal. The method comprises providing both laser signals to a coupler unit. The method comprises receiving by and coupling in/into the coupler unit both laser signals. The method comprises providing coupled laser signals to an optical waveguide. The method comprises receiving the coupled laser signals at the optical waveguide and causing a (passive) concentric (spatial) alignment or mode-matching of the coupled laser signals by allowing the received laser signals a mode, in particular a single-mode, propagation in the waveguide. The method for information transmission/quantum key distribution and quantum communication in a quantum communication network further comprises providing a concentrically (spatially) aligned or mode-matched laser signal to a directional unit. The method comprises receiving the concentrically (spatially) aligned or mode-matched laser signals at the directional unit. The method comprises providing the concentrically (spatially) aligned or mode-matched laser signals to a second terminal of the quantum communication network.

According to a sixth aspect, a method for providing concentrically (spatially) aligned or mode-matched laser beams may be provided. The method may comprises providing at least two laser beam sources, each of the at least two laser beam sources being configured to generate a laser beam. The method may comprises providing the laser beam to a coupler, wherein the coupler is configured to receive the at least two laser beams. The method for providing the concentrically (spatially) aligned or mode-matched laser beams may further comprises providing the at least two coupled laser beams to an optical waveguide. The method further may comprises, at or by the optical waveguide, receiving the at least two coupled laser beams and causing a (passive) concentric (spatial) alignment or mode-matching of the coupled laser beams by allowing the received at least two laser beams a mode, in particular single-mode, propagation to provide concentrically (spatially) aligned or mode-matched laser beams. The method for providing the concentrically (spatially) aligned or mode-matched laser beams may further comprises providing the concentrically (spatially) aligned or mode-matched laser beams.

These and other aspects of the invention will now be further described, by way of example only, with reference to the accompanying figures, wherein like reference numerals refer to like parts, and in which:
- Figure 1: illustrates one embodiment of the system for information transmission (quantum key distribution and quantum communication) in a quantum communication network;
- Figure 2: illustrates a variant of the embodiment of the system;
- Figure 3: illustrates a variant of the embodiment of the system;
- Figure 4: illustrates the steps of a method for information transmission (quantum key distribution and quantum communication) in a quantum communication network;
- Figure 5: illustrates an embodiment of the apparatus for providing concentrically aligned or mode-matched laser beams;
- Figure 6: illustrates the steps of a method for providing concentrically aligned or mode-matched laser beams;
- Figure 7: illustrates the state of the art for overlapping a classic channel and a quantum channel in a LCT;
- Figure 8: illustrates a variant of the embodiment of the system; and
- Figure 9: illustrates a variant of the embodiment of the system.

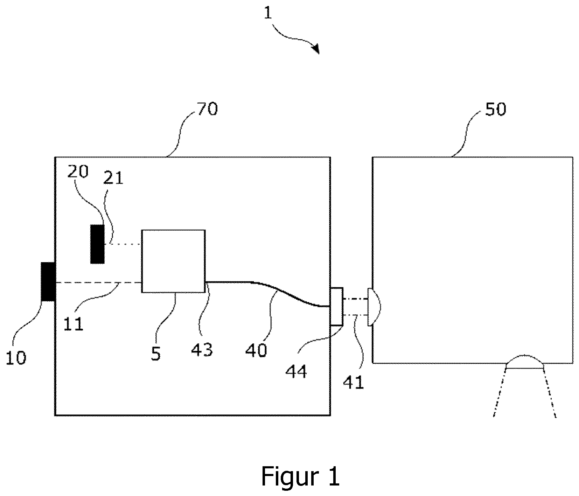

Figure 1 illustrates a system 1 for information transmission/quantum key distribution and quantum communication in a quantum communication network. The system 1 comprises two laser signals sources 10, 20. The first laser signal source 10 emits a first laser signal 11, which carries classic information via an optical modulations scheme. The second laser signals source 20 emits a second laser signal 21, which carries quantum information via single photon pulses, for example quantum bits for quantum key distribution. Both laser signals 11, 21 are sent towards the coupler unit 5 which couples both signals 11, 21. As a result, both laser signals 11, 21 are spatially aligned reasonably well. In other words, both laser signal centers (spatial domain), are slightly misaligned to each other. To achieve mode-matching (i.e., a nearly perfect concentric and unidirectional alignment) of both laser signals 11, 21, both signals are sent from the coupler unit 5 to an optical waveguide 40, in the present case illustrated by way of example, a single-mode fiber 40. The first end 43 of the single-mode fiber 40 is directly connected to the first output of the coupler unit 5. The laser signals 11, 21 received by the single-mode fiber 40 propagate in the fundamental mode along the single-mode fiber 40, for example LP₀₁. The second end of the single-mode fiber comprises a lens 44, that receives both laser signals, propagating in single-mode, from the single-mode fiber 40 and provides those signals as concentrically spatially aligned or mode-matched laser signals 41 to the directional unit 50.

The concentric spatial and unidirectional alignment of the laser signals is passively achieved by the properties of the single-mode fiber 40. The single-mode fiber 40 allows the received laser signals a single-mode propagation (only) through the said single-mode fiber 40. Any alignment imperfection of any of the beams at the input of the fiber 40 are converted to amplitude modulation. Both signals are nearly perfectly aligned when leaving the single-mode fiber via the second end.

An additional (passive or active) alignment of the laser signals 11, 21 via an alignment mechanism is not necessary. The only mechanical control mechanism is a pointing or steering mechanism (not shown) in the directional unit 50, that steers the spatial concentrically aligned or mode-matched signals towards a second terminal/receiver of the quantum communication network.

To prevent photon-number splitting attacks, the vulnerable second laser signal source 20 for the quantum channel, the coupler unit 5 and the single-mode fiber 40 are within a security unit 70 to prevent unwanted light signals reaching a potential attacker. The only entrance interface is given by the first laser signal source 10 that carries classical information.

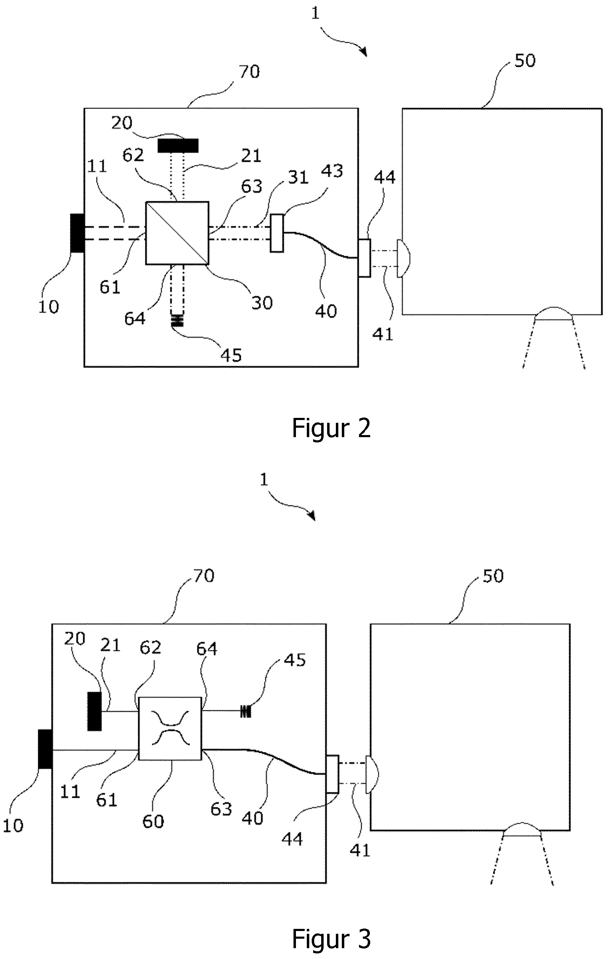

Figure 2 illustrates a variant of the embodiment of Figure 1. In this illustrated case, the coupler unit 5 is configured as a free space beam coupler 30 / short beam coupler 30. This beam coupler 30 comprises a first entrance 61 and a second entrance 62. Each entrance receives the corresponding laser signals 11 or 21. The beam coupler 30 comprises an area, in which the two received signals 11, 21 are coupled. In case of the specific beam coupler 30 exemplarily provided in the variant of figure 1, the coupler area corresponds to a semi-transparent mirror. At this semi-transparent mirror, both signals 11, 21 are coupled according to a power division ratio of, for example, 99:1. In other words, a small part of the second laser signal 21 (quantum channel) is coupled with a major part of the first laser signal 11 (classic channel) to represent the first portion of coupled laser signals 31. The remaining laser signal parts represent the second portion of coupled laser signals and are sent towards an absorption unit 45.

The first portion of laser signals 31 is sent to the first end 43 of the waveguide 40, which, in the illustrated case, is configured as a single-mode fiber 40. The first end 43 is, by way of example, configured as a first lens 43 to receive the first portion of coupled laser signals 31 as they propagate in free space. The first end 43 provides the said portion of coupled laser signals 31 to the single-mode fiber 40.

The first portion of coupled laser signals 31 received by the single-mode fiber 40 propagates in single-mode or fundamental-mode along the single-mode fiber 40, for example LP₀₁. The second end of the single-mode fiber 40 comprises a second lens 44, that receives the first portion of coupled laser signals 31 from the single-mode fiber 40 and provides those signals 31 as concentrically spatially aligned or mode-matched laser signals 41 to the directional unit 50.

The concentric spatial alignment or mode-matching of the first portion of coupled laser signals 31 is passively achieved by the properties of the single-mode fiber 40. The single-mode fiber 40 allows the received first portion of coupled laser signals 31 a single-mode propagation through the said single-mode fiber 40. Hence, the first portion of coupled laser signals 31 are nearly perfectly aligned when leaving the single-mode fiber 40 via the second lens 44.

An additional alignment of the laser signal 11, 21 via an alignment mechanism is not necessary. The only mechanical control mechanism is a pointing or steering mechanism in the directional unit 50 that steers the concentrically spatially aligned laser signals 41 towards a second terminal/receiver of the quantum communication network.

To prevent photon-number splitting attacks, the vulnerable second laser signal source 20 for the quantum channel, the beam coupler 30, the absorption unit 45, and the single-mode fiber 40 are within a security unit 70 to prevent unwanted electromagnetic signals reaching a potential attacker. The only entrance interface is given by the first laser signal source 10 that carries classical information. The output is given by the second lens 44.

Figure 3 illustrates a variant of the embodiment of Figure 1. In this illustrated case, the coupler unit 5 is configured as a fiber coupler 60. Both laser signal sources 10, 20 provide their laser signal via an optical fiber to the fiber coupler 60.

This fiber coupler 60 comprises a first 61 and a second entrance 62. Each entrance receives the corresponding laser signal 11 or 21 via a fiber. The fiber coupler 60 comprises an area in which the two received laser signals 11, 21 are coupled. At this coupler area, both signals 11, 21 are coupled according to a power division ratio of, for example, 99:1. In other words, a small part of the second laser signal (quantum channel) is coupled with a major part of the first laser signal (classic channel) to represent the first portion of coupled laser signals. The remaining laser signal parts represent the second portion of coupled laser signals and are sent towards an absorption unit 45.

The first portion of laser signals is sent to the waveguide 40, which, in the illustrated case, is configured as a single-mode fiber 40. The first end (no reference sign) of the single-mode fiber 40 is directly connected to fiber coupler 60 at the first entrance 63.

The first portion of coupled laser signals (inside 60) received by the single-mode fiber 40 propagates in fundamental-mode along the single-mode fiber 40, for example LP₀₁. The second end of the single-mode fiber 40 comprises a second lens 44, that receives both in single-mode propagating laser signals from the single-mode fiber 40 and provides those signals as concentrically spatially aligned or mode-matched laser signals 41 to the directional unit 50.

The concentric spatial alignment or mode-matching is passively achieved by the properties of the single-mode fiber 40. The single-mode fiber 40 allows the received first portion of laser signals (only) a single mode propagation through the said single-mode fiber 40. Hence, the first portion of coupled laser signals is nearly perfectly aligned when leaving the single-mode fiber 40 via the second end 44.

An additional alignment of the laser signal 11, 21 via an alignment mechanism is not necessary. The only mechanical control mechanism is a pointing or steering mechanism in the directional unit 50, that redirects and steers the concentrically spatially aligned laser signal 41 towards a second terminal/receiver of the quantum communication network.

To prevent photon-number splitting attacks, the vulnerable second laser signal source 20 for the quantum channel, the fiber coupler 60, the absorption unit 45, and the single-mode fiber 40 are with a security unit 70 to prevent unwanted electromagnetic signals reaching a potential attacker. The only entrance interface is given by the first laser signal source 10 that carries classic information. The output is given by the second lens 44.

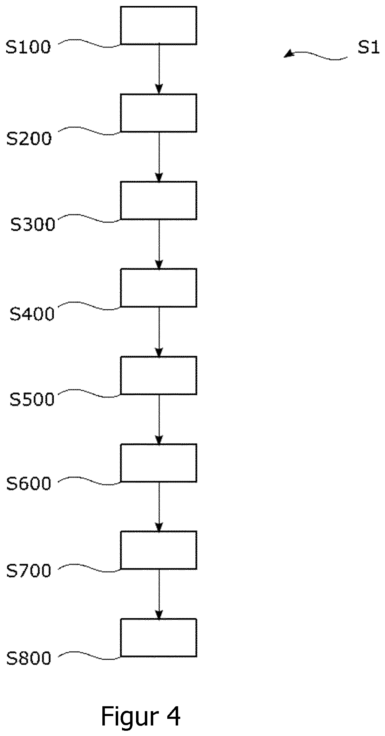

Figure 4 illustrates the steps of a method for information transmission (quantum key distribution and quantum communication) in a quantum communication network. The method comprises the following steps:
- providing a first laser signal source, configured to provide a first laser signal (step S100);
- providing a second laser signal source, configured to provide a second laser signal (step S200);
- providing both laser signals to a coupler unit (step S300);
- receiving by and coupling in/into the coupler unit both laser signals (step S400);
- providing coupled laser signals to an optical waveguide (step S500);
- receiving the coupled laser signals at the optical waveguide and causing a concentric (unidirectional) spatial alignment of the coupled laser signals by allowing the received laser signals a mode propagation, e. g. a single-mode propagation, in the optical waveguide to provide concentrically aligned or mode-matched laser signals to a directional unit (step S600);
- receiving the concentrically (unidirectionally) spatially aligned laser signals at the directional unit (step S700);
- providing the concentrically (unidirectionally) spatially aligned laser signals to a second terminal of the quantum communication network (step S800).

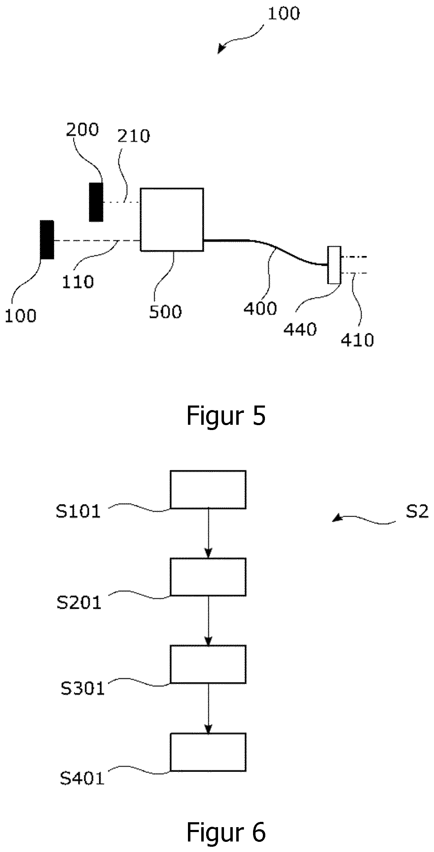

Figure 5 illustrates an embodiment of the apparatus 100 for providing concentrically unidirectionally aligned or mode-matched laser beams.

The apparatus 100 comprises a first and second laser beam source 100, 200. Each laser beam source 100, 200 emits a corresponding laser beam 110, 210 towards a beam coupler 500. The beam coupler 500 couples both laser beams 110, 210 and provides the coupled laser signal to a single-mode fiber 400. The single-mode fiber 400 provides concentrically spatially and unidirectionally aligned laser beams to a lens 440 at the second end of the said single-mode fiber 400.

The concentric spatial unidirectional alignment or mode matching of the laser beams 110, 210 is passively achieved by the properties of the single-mode fiber 400. The single-mode fiber 400 allows the received coupled laser beams (only) a single-mode propagation through the said single-mode fiber 409. Hence, the coupled laser beams are nearly perfectly spatially aligned when leaving the single-mode fiber 400 via the second end 440 into the free space.

Figure 6 illustrates the steps of a method S2 for providing concentrically (and unidirectionally) aligned laser beams. The method S2 comprises the steps:
- providing at least two laser beam sources, each configured to generate a laser beam (step S101);
- providing the laser beam to a coupler (step S201),
wherein the coupler is configured to receive the at least two laser beams;
- providing the at least two coupled laser beams to an optical waveguide (step S301), wherein the method further comprises, at or by the optical waveguide,
- receiving the at least two coupled laser beams and
- causing a concentric alignment of the coupled laser beams by allowing the received at least two laser beams a mode propagation, e. g. single-mode propagation, to provide concentrically (and unidirectionally) aligned laser beams;
- providing the concentrically (and unidirectionally) aligned laser beams (S401).

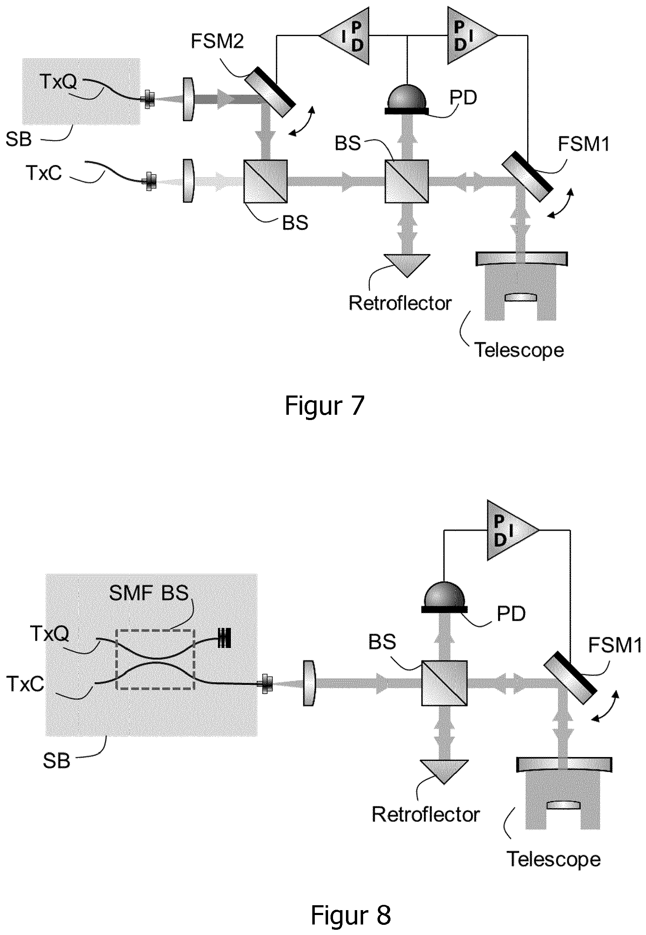

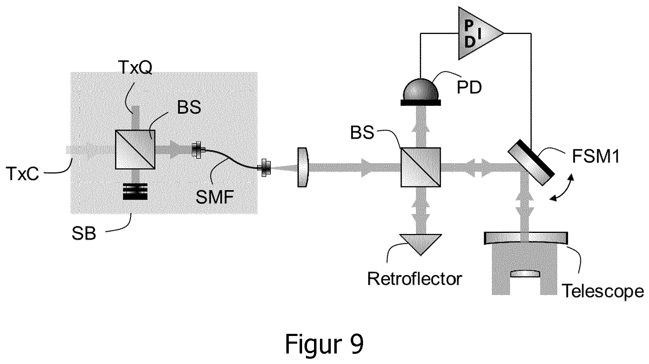

The present concept as described herein may be considered to simplify the LCT for space-based QKD and QC by coupling the transmission channels TxQ and TxC into a single mode fiber (SMF) in comparison to state of the art approaches as illustrated in figure 7. The two channels are spatially overlapped in the single-mode fiber and, thus, only a single set of fine steering mechanism (FSM), photodetector, and feedback loop is used - instead of two FSM in case of conventional LCTs as exemplified by figure 7 - to achieve accurate pointing of both laser beams simultaneously towards the communication partner. The two channels may be coupled into the same fiber either by means of a fiber-based beam splitter (variant in figure 8) or by a free-space beam splitter in front of a single mode fiber (variant in figure 9).

In figure 8, one output guides a fraction of the power of both TxC and TxQ, which are specific examples of the first laser signal and the second laser signal in figures 7 to 9, to the optical bench, where the combined light is collimated and subsequently sent to FSM1 and the telescope. The other BS output is terminated either by using a fiber terminator or a photodetector. The latter may be used for power monitoring. The power fraction of the two channels is given by the coupling ratio of the SMF BS and it can be chosen depending on the input power levels of TxC and TxQ and the desired output levels. A coupling ratio in which the majority of light from TxQ is terminated, while most of the TxC light is transmitted to the optical bench is beneficial (e.g., a coupling ratio of 99:1). This is because the TxQ power must be reduced to a mean photon occupancy of <1 photons per pulse before arriving at the optical bench, while the TxC channel benefits from fewer losses to improve the overall power efficiency of the system. The above-mentioned coupling ratio is also favored for security reasons, as described below.

In figure 9 the two channels TxC and TxQ are coupled into the same SMF only after combining the two beams with a free-space BS. This has the same desired effect as the variant in figure 8, namely that the two beams paths are spatially overlapped in the LCT. In figure 9 one of the BS outputs is terminated in the same fashion as in figure 8. The considerations about the coupling ratio described above apply for figure 9 as well.

Figure 8, and 9 also show security boundaries (SB) that indicate sections of the setups in which the TxQ mean photon occupancy is expected to be > 1 photons. As a result, photon-number splitting attacks are possible here in general. Herein, the SMF and beam combiner may be included within the SB.

Finally, it should be mentioned that the concept and its variants described herein may be implemented in an LCT on a satellite or in a ground station. Furthermore, the concept and its variants are beneficial for various kinds of QKD protocols, such as "prepare-and-measure" (e.g. BB84) and entanglement-based protocols. The quantum information may be physically encoded in the light via different degrees-of-freedom, for example polarisation, time-bin or phase.

As stated above, the concept and its variants significantly reduce cost and complexity of the LCT by avoiding the extra FSM2 (see Figure 7) of conventional LCTs. The accurate steering of the low power quantum channel is done via the classical channel, which operates at much higher optical powers and thus results in an accessible signal for the pointing feedback and thus a better pointing performance compared to state-of-the-art solutions. Apart from this, the approach simplifies the efforts in alignment, integration and test (AIT), thanks to the reduced number of parts. Any thermo-mechanical effects on the optical bench of the LCT affects both channels in the very same way and can be compensated by the one (and only) FSM. Moreover, the algorithm running the single pointing system in the present concept and its variants are expected to be less complex than the one running two pointing systems simultaneously in conventional LCTs for QKD and QC. This contributes favourably to the stability of the system in operation.

In entanglement-based QKD protocols, where an optical link is simultaneously established with two users on ground, two photons leaving the source at the same time have to be coupled into two individual optical benches from where they are directed to the individual users on ground. Such setup potentiates the need for optical stability and efficient pointing control between the photon source and optical benches. In such entanglement-based scenario, the presented concepts and its variants would present even higher benefit than in the case of a prepare-and-measure QKD protocol.

Another benefit is related to the security of the LCT. By tailoring the ratio between the classical and quantum channel before they leave the common fiber, additional security against a so-called "Trojan horse attack" directed against the quantum source (now additionally protected through the common beam combiner) can be further mitigated.

## Claims

1. A system (1) for information transmission in a quantum communication network comprising:
- a first laser signal source (10) configured to generate a first laser signal (11), and
- a second laser signal source (20) configured to generate a second laser signal (21),
wherein each laser signal source (10, 20) is configured to provide the corresponding laser signal (11, 21);
- a coupler unit (5), wherein said coupler unit is configured to receive and to couple both laser signals (11, 21);
- an optical waveguide (40), wherein said optical waveguide is configured to
- receive the coupled laser signals and
- cause a concentric alignment of the coupled laser signals by allowing the received coupled laser signals a mode propagation to provide concentrically aligned laser signals (41);
- a directional unit (50), wherein said directional unit (50) is configured to receive the concentrically aligned laser signals (41) and to provide the concentrically aligned laser signals to a second terminal of the quantum communication network over a free-space optical link;
wherein the first laser signal source (10) is further configured to provide classic information via an optical modulations scheme and the second laser signal source (20) is further configured to provide quantum information via single photon pulses.

2. The system (1) of claim 1, wherein the mode propagation is configured as a single mode propagation; and/or
wherein the optical waveguide (40) is configured as a single-mode fiber.

3. The system (1) of any one of claims 1 to 2, wherein the first laser signal (11) comprises a first laser signal power and the second laser signal (21) comprises a second laser signal power,
wherein the coupler unit (5) is further configured to couple both laser signals (11) (21) according to a predefined power division ratio.

4. The system of any one of claims 1 to 3, wherein the coupler unit (5) further comprises:
- a first entrance (61) configured to receive the first laser signal (11),
- a second entrance (62) configured to receive the second laser signal (21),
wherein each entrance (61, 62) is configured to provide their received laser signal (11, 21) to
- a couple area, wherein said couple area is configured to receive both laser signals and couple the received laser signals according to the predefined power division ratio into a first portion (31) of coupled laser signals and a second portion of coupled laser signals,
wherein the couple area is further configured to
- provide the first portion (31) of coupled laser signals to a first output (63) and the second portion of coupled laser signals to a second output (64),
wherein the first output (63) is configured to
provide the first portion (31) of coupled laser signals to the optical waveguide (40) and the second output (64) is configured to provide the second portion of coupled laser signals to an absorber (45) or a fiber terminator or a detection unit.

5. The system of any one of claims 1 to 4, wherein the coupler unit (5) is configured as a beam, in particular free space beam, coupler (30) or an optical fiber coupler (60), in particular a single-mode fiber coupler.

6. The system of any one of claims 1 to 5, wherein the second laser signal source (20), the coupler unit (5) and the optical waveguide (40) are arranged within a security unit (70) to prevent eavesdropping, in particular photon-number splitting attacks,
wherein the first laser signal source (10) is further configured to be an entrance interface to the security unit (70) and a second end (44) of the optical waveguide (40) that provides the concentrically aligned laser signals (41) is further configured to be an output interface out of the security unit (70).

7. A communication terminal, in particular a laser communication terminal, comprising the system (1) according to any one of claims 1 to 6.

8. A satellite or ground-based station or air-/space-/craft, comprising the system (1) according to any one of claims 1 to 6.

9. A method (S1) for information transmission in a quantum communication network, comprising the steps:
- providing (S100) a first laser signal source configured to provide a first laser signal;
- providing (S200) a second laser signal source configured to provide a second laser signal;
- providing (S300) both laser signals to a coupler unit;
- receiving (S400) by and coupling into the coupler unit both laser signals;
- providing (S500) coupled laser signals to an optical waveguide;
- receiving (S600) the coupled laser signals at the optical waveguide and causing a concentric alignment of the coupled laser signals by allowing the received laser signals a mode propagation in the optical waveguide to provide concentrically aligned laser signals to a directional unit;
- receiving (S700) the concentrically aligned laser signals at the directional unit;
- providing (S800) by the directional unit the concentrically aligned laser signals to a second terminal of the quantum communication network over a free-space optical link, wherein the first laser signal source is further configured to provide classic information via an optical modulations scheme and the second laser signal source is further configured to provide quantum information via single photon pulses.

## Patentansprüche

1. Ein System (1) zur Informationsübertragung in einem
Quantenkommunikationsnetz, das umfasst:
- eine erste Lasersignalquelle (10), die zur Erzeugung eines ersten Lasersignals (11) konfiguriert ist, und
- eine zweite Lasersignalquelle (20), die zur Erzeugung eines zweiten Lasersignals (21) konfiguriert ist,
wobei jede Lasersignalquelle (10, 20) so konfiguriert ist, dass sie das entsprechende Lasersignal (11, 21) liefert;
- eine Kopplereinheit (5), wobei die Kopplereinheit so konfiguriert ist, dass sie beide Lasersignale (11, 21) empfängt und koppelt;
- einen Lichtwellenleiter (40), wobei der Lichtwellenleiter so konfiguriert ist, dass er
- die gekoppelten Lasersignale empfangen und
- eine konzentrische Ausrichtung der gekoppelten Lasersignale bewirken, indem sie den empfangenen gekoppelten Lasersignalen eine Modenausbreitung ermöglichen, um konzentrisch ausgerichtete Lasersignale zu erzeugen (41);
- eine Richtungseinheit (50), wobei die Richtungseinheit (50) so konfiguriert ist, dass sie die konzentrisch ausgerichteten Lasersignale (41) empfängt und die konzentrisch ausgerichteten Lasersignale über eine optische Freiraumverbindung an ein zweites Terminal des Quantenkommunikationsnetzes liefert;
wobei die erste Lasersignalquelle (10) ferner so konfiguriert ist, dass sie klassische Informationen über ein optisches Modulationsschema bereitstellt, und die zweite Lasersignalquelle (20) ferner so konfiguriert ist, dass sie Quanteninformationen über Einzelphotonenimpulse bereitstellt.

2. System (1) nach Anspruch 1, wobei die Modenausbreitung als Einmodenausbreitung konfiguriert ist; und/oder
wobei der Lichtwellenleiter (40) als Singlemode-Faser ausgebildet ist.

3. System (1) nach einem der Ansprüche 1 bis 2, wobei das erste Lasersignal (11) eine erste Lasersignalleistung umfasst und das zweite Lasersignal (21) eine zweite Lasersignalleistung umfasst,
wobei die Kopplereinheit (5) ferner so konfiguriert ist, dass sie beide Lasersignale (11) (21) nach einem vordefinierten Leistungsteilungsverhältnis koppelt.

4. Das System nach einem der Ansprüche 1 bis 3, wobei die Kopplereinheit (5) ferner umfasst:
- einen ersten Eingang (61), der für den Empfang des ersten Lasersignals (11) konfiguriert ist,
- einen zweiten Eingang (62), der für den Empfang des zweiten Lasersignals (21) konfiguriert ist,
wobei jeder Eingang (61, 62) so konfiguriert ist, dass er sein empfangenes Lasersignal (11, 21) an
- einen Kopplungsbereich liefert, wobei der Kopplungsbereich so konfiguriert ist, dass er beide Lasersignale empfängt und die empfangenen Lasersignale nach dem vordefinierten Leistungsteilungsverhältnis in einen ersten Teil (31) von gekoppelten Lasersignalen und einen zweiten Teil von gekoppelten Lasersignalen koppelt,
wobei der Kopplungsbereich ferner so konfiguriert ist, dass er
- den ersten Teil (31) der gekoppelten Lasersignale an einen ersten Ausgang (63) und den zweiten Teil der gekoppelten Lasersignale an einen zweiten Ausgang (64) liefert,
wobei der erste Ausgang (63) so konfiguriert ist, dass er den ersten Teil (31) der gekoppelten Lasersignale an den Lichtwellenleiter (40) liefert, und der zweite Ausgang (64) so konfiguriert ist, dass er den zweiten Teil der gekoppelten Lasersignale an einen Absorber (45) oder einen Faserabschlusswiderstand oder eine Detektionseinheit liefert.

5. System nach einem der Ansprüche 1 bis 4, wobei die Kopplereinheit (5) als Strahl-, insbesondere Freiraumstrahl-Koppler (30) oder als Lichtwellenleiter-Koppler (60), insbesondere als Singlemode-Faser-Koppler, ausgebildet ist.

6. System nach einem der Ansprüche 1 bis 5, wobei die zweite Lasersignalquelle (20), die Kopplereinheit (5) und der Lichtwellenleiter (40) innerhalb einer Sicherheitseinheit (70) angeordnet sind, um Abhörangriffe, insbesondere Photonenzahlsplitting-Angriffe, zu verhindern,
wobei die erste Lasersignalquelle (10) ferner so konfiguriert ist, dass sie eine Eingangsschnittstelle zu der Sicherheitseinheit (70) ist, und ein zweites Ende (44) des Lichtwellenleiters (40), das die konzentrisch ausgerichteten Lasersignale (41) bereitstellt, ferner so konfiguriert ist, dass es eine Ausgangsschnittstelle aus der Sicherheitseinheit (70) ist.

7. Kommunikationsterminal, insbesondere Laserkommunikationsterminal, mit dem System (1) nach einem der Ansprüche 1 bis 6.

8. Eine Satelliten- oder Bodenstation oder ein Luft-/Raumfahrzeug, das das System (1) nach einem der Ansprüche 1 bis 6 umfasst.

9. Verfahren (S1) zur Informationsübertragung in einem Quantenkommunikationsnetz, das die Schritte umfasst:
- Bereitstellen (S100) einer ersten Lasersignalquelle, die so konfiguriert ist, dass sie ein erstes Lasersignal liefert;
- Bereitstellen (S200) einer zweiten Lasersignalquelle, die so konfiguriert ist, dass sie ein zweites Lasersignal liefert;
- Bereitstellen (S300) beider Lasersignale für eine Kopplereinheit;
- Empfangen (S400) und Einkoppeln der beiden Lasersignale in die Kopplereinheit;
- Bereitstellen (S500) gekoppelter Lasersignale für einen Lichtwellenleiter;
- Empfangen (S600) der gekoppelten Lasersignale an dem Lichtwellenleiter und Bewirken einer konzentrischen Ausrichtung der gekoppelten Lasersignale, indem den empfangenen Lasersignalen eine Modenausbreitung in dem Lichtwellenleiter ermöglicht wird, um konzentrisch ausgerichtete Lasersignale an eine Richtungseinheit zu liefern;
- Empfangen (S700) der konzentrisch ausgerichteten Lasersignale an der Richtungseinheit;
- Bereitstellen (S800) der konzentrisch ausgerichteten Lasersignale durch die Richtungseinheit an ein zweites Terminal des Quantenkommunikationsnetzes über eine optische Freiraumverbindung, wobei die erste Lasersignalquelle ferner so konfiguriert ist, dass sie klassische Informationen über ein optisches Modulationsschema bereitstellt, und die zweite Lasersignalquelle ferner so konfiguriert ist, dass sie Quanteninformationen über Einzelphotonenimpulse bereitstellt.

## Revendications

1. Système (1) de transmission d'informations dans un réseau de communication quantique comprenant:
- une première source de signal laser (10) conçue pour générer un premier signal laser (11), et
- une seconde source de signal laser (20) conçue pour générer un second signal laser (21), et
chaque source de signal laser (10, 20) est conçue pour fournir le signal laser correspondant (11, 21);
- une unité de couplage (5), ladite unité de couplage étant conçue pour recevoir et coupler les deux signaux laser (11, 21);
- un guide d'ondes optiques (40), ledit guide d'ondes optiques étant conçu pour
- recevoir les signaux laser couplés et
- provoquer un alignement concentrique des signaux laser couplés en permettant aux signaux laser couplés reçus une propagation de mode pour fournir des signaux laser alignés concentriquement (41);
- une unité directionnelle (50), ladite unité directionnelle (50) est configurée pour recevoir les signaux laser concentriquement alignés (41) et pour fournir les signaux laser concentriquement alignés à un second terminal du réseau de communication quantique sur une liaison optique en espace libre;
dans lequel la première source de signal laser (10) est en outre configurée pour fournir des informations classiques par le biais d'un schéma de modulation optique et la seconde source de signal laser (20) est en outre configurée pour fournir des informations quantiques par le biais d'impulsions de photons uniques.

2. Système (1) selon la revendication 1, dans lequel la propagation de mode est configurée comme une propagation de monomode; et/ou
dans lequel le guide d'ondes optiques (40) est configuré comme une fibre monomode.

3. Système (1) selon l'une quelconque des revendications 1 à 2, dans lequel le premier signal laser (11) comprend une première puissance de signal laser et le second signal laser (21) comprend une seconde puissance de signal laser, dans lequel l'unité de couplage (5) est en outre configurée pour coupler les deux signaux laser (11) (21) selon un rapport de division de puissance prédéfini.

4. Système selon l'une quelconque des revendications 1 à 3, dans lequel l'unité de couplage (5) comprend:
- une première entrée (61) conçue pour recevoir le premier signal laser (11),
- une seconde entrée (62) conçue pour recevoir le second signal laser (21),
dans lequel chaque entrée (61, 62) est conçue pour fournir son signal laser reçu (11, 21)
- à une zone de couplage, ladite zone de couplage étant conçue pour recevoir les deux signaux laser et coupler les signaux laser reçus selon le rapport de division de puissance prédéfini en une première partie (31) de signaux laser couplés et une seconde partie de signaux laser couplés,
dans lequel la zone de couplage est en outre conçue pour
- fournir la première partie (31) des signaux laser couplés à une première sortie (63) et la seconde partie des signaux laser couplés à une seconde sortie (64),
dans lequel la première sortie (63) est conçue pour
fournir la première partie (31) des signaux laser couplés au guide d'ondes optiques (40) et la seconde sortie (64) est conçue pour fournir la seconde partie des signaux laser couplés à un absorbeur (45) ou à une terminaison de fibre ou à une unité de détection.

5. Système selon l'une quelconque des revendications 1 à 4, dans lequel l'unité de couplage (5) est configurée comme un coupleur de faisceau, en particulier de faisceau en espace libre (30) ou un coupleur de fibre optique (60), en particulier un coupleur de fibre monomode.

6. Système selon l'une quelconque des revendications 1 à 5, dans lequel la seconde source de signal laser (20), l'unité de couplage (5) et le guide d'ondes optiques (40) sont disposés à l'intérieur d'une unité de sécurité (70) pour empêcher les écoutes clandestines, en particulier les attaques par dédoublement du nombre de photons,
dans lequel la première source de signaux laser (10) est en outre configurée pour être une interface d'entrée dans l'unité de sécurité (70) et une seconde extrémité (44) du guide d'ondes optiques (40) qui fournit les signaux laser concentriquement alignés (41) est en outre configurée pour être une interface de sortie hors de l'unité de sécurité (70).

7. Terminal de communication, en particulier un terminal de communication laser, comprenant le système (1) selon l'une quelconque des revendications 1 à 6.

8. Satellite, station au sol ou aéronef/engin spatial, comprenant le système (1) selon l'une des revendications 1 à 6.

9. Procédé (S1) de transmission d'informations dans un réseau de communication quantique, comprenant les étapes:
- fournir (S100) une première source de signal laser conçue pour fournir un premier signal laser;
- fournir (S200) une seconde source de signal laser conçue pour fournir un second signal laser;
- fournir (S300) les deux signaux laser à une unité de couplage;
- recevoir (S400) par et coupler dans l'unité de couplage les deux signaux laser;
- fournir (S500) des signaux laser couplés à un guide d'ondes optiques;
- recevoir (S600) les signaux laser couplés au niveau du guide d'ondes optiques et provoquer un alignement concentrique des signaux laser couplés en permettant aux signaux laser reçus une propagation de mode dans le guide d'ondes optiques afin de fournir des signaux laser alignés concentriquement à une unité directionnelle;
- recevoir (S700) les signaux laser alignés concentriquement au niveau de l'unité directionnelle;
- fournir (S800) par l'unité directionnelle les signaux laser concentriquement alignés à un second terminal du réseau de communication quantique par le biais d'une liaison optique en espace libre, dans lequel la première source de signaux laser est en outre configurée pour fournir des informations classiques par le biais d'un schéma de modulation optique et la seconde source de signaux laser étant en outre configurée pour fournir des informations quantiques par le biais d'impulsions de photons uniques.
